# EUROPEAN PATENT APPLICATION

(11) **EP 2 339 481 A1**
(43) Date of publication of application: **29.06.2011**
(21) Application number: 09177926.4
(22) Date of filing: 03.12.2009
(51) Int. Cl.: G06F 17/30

(54) **Enablement of three-dimensional hosting, indexing, analysing and querying structure for spatial systems**

(71) Applicant: National Digital Research Centre, 8 Dublin (IE); UNIVERSITY COLLEGE DUBLIN, Dublin 4 (IE)
(72) Inventor: Laefer, Debra F., 18 Dublin (IE); Bertolotto, Michela, Co. Dublin (IE); Schon, Bianca, 20 Dublin (IE); Mosa, Abu Saleh Mohammad, 2 Dublin (IE)
(74) Representative: Catesby, Olivia Joanne

(57) **Abstract**

Systems, method, and other embodiments associated with indexing three-dimensional, 3D, point data within a spatial system are described herein comprising:
decomposing the 3D point data into one or more multiples of eight cubic regions;
populating an octree index structure by inserting the point data within each cubic region into said octree index structure.

## Description

### Field of the Invention

The invention relates to indexing systems, in particular indexing systems for three-dimensional(3D) spatial data.

### Background to the Invention

In recent decades, there has been a significant increase in the volume of information accumulated and accordingly the importance of management and indexing of this data has increased. It is estimated that 80% of all data presently collected has a spatial component.

Spatial data may be accumulated in a variety of ways. Light Detection and Ranging, (LiDAR), for example, is a remote sensing technology that measures properties of scattered light for determining distances. Aerial LiDAR is generally conducted by mounting the LiDAR device to an aircraft. Knowledge of the aircraft's position [from Global Positioning System (GPS)] and rotation [from Inertial Navigation System (INS)] is used to enable the conversion of ranges to point positions. Stationary and mobile based ground units are also used to accumulate information. The product of aerial laser scanning is a dense cloud of three-dimensional (3D) points, commonly referred to as a point cloud. To separate information, post-processing can transform raw point clouds into different structures, for example bare earth models or digital elevation models. LiDAR technology has been used in many areas of applications such as (a) Geographic Information System (GIS) content generation, (b) disaster response and damage assessment, (c) flood plain mapping, (d) forestry, and (e) urban modelling as the denseness of laser scanner data offers the opportunity for a faithful reconstruction of the surfaces. This also serves to emphasise the importance of efficient management of this data.

Spatial Information Systems (SISs) are used to control the organisation, storage, management and retrieval of spatial data. For example, geographic information systems (GISs) have been used since the early 1960s to address the issues faced by planners and resource managers dealing with the spatial nature of systems in the real world. GISs consider both what a geometric object is and where it is located. A mapping component is combined with the information components in planning and resource management.

The earliest systems utilised a distinct file-based system of representing spatial features and the related attribute information in either vector or raster format. Later, an integrated approach to store the spatial component (together with the attribute data) directly into a database (in the same table) was developed. This approach relied on data base management systems (DBMS) with a spatial engine to reduce data inconsistencies and redundancies compared to storing information in a file-based system. Retrieval and manipulation of all data is commonly facilitated through structured query language (SQL). Specifically this approach relied on the extensibility of DBMSs (i.e. the ability to add new types and operations), and produced the so-called Spatial Database Management System (SDBMS). This technology allows for the management of all data within the same engine.

In the early 1990s, spatial data was predominantly stored in modified DBMS. Further development through the 1990s, resulted in the emergence of a new paradigm called the Object-Relational Database Management System (ORDBMS), which allowed geometry object types to be added to the database. A geometry feature or object may be a point, a line, a polygon, solid or other related structures that form the basic descriptor of a spatial entity.

Support for two-dimensional (2D) feature types and indexing techniques in systems dealing with spatial data sets has been well documented. As part of this, spatial indexing techniques evolved during in the middle of the 1980s with Guttman's R-tree being one of the most common indexing strategy implemented in current SISs.

Current SISs aim to integrate true 3D features. This is largely driven by the increased availability of 3D data (e.g. from aerial or terrestrial laser scanning such as LiDAR described above). A 3D SIS must support 3D data types, such as point and volume in 3D Euclidean space. Three-dimensional data types are based on a 3D geometric data model (i.e. vector and/or raster data with underlying geometry and topology). A 3D spatial system must also offer operations and functions embedded into its query language that can operate with its 3D data types.

An R-tree is a hierarchical, node based tree structure that decomposes the search space into minimum bounding blocks (MBB) in 3D or minimum bounding rectangles (MBR) in 2D. These bounding blocks may be overlapping. Each node in the R-tree can have a variable number of entries up to a pre-defined threshold, wherein each node may store two pieces of information: i.e. a bounding block of all the entries within this child node and a child node identifier. Data types, specifically intended for use with 3D point clouds such as that described above, commonly use a R-tree bounding box mechanism to sort the data points into blocks of points. The decision on how to implement a bounding box on dense 3D point data is non-trivial. For example, current systems form bounding boxes according to a simple sequential points-per-block aspect without taking spatial semantics into account, which will result in similar points not being grouped together in the same bounding box. Regarding search operations, this results in either a lack of accuracy in the search results or in prolonged search time.

Boundaries of tree nodes often overlap in R-trees. If bounds overlap, many more branches of the tree structure have to be traversed in order to process a query, which substantially reduces the R-tree's efficiency.

With R-trees, the richness of the 3D spatial data is stripped as the system does not maintain the semantic relationship between points. The majority of current systems do not offer support specifically for the type of spatial data. One solution that has been implemented is storing a fixed set of 3D points in a block containing binary large objects (BLOBs) in one data table and then links supporting information about the data within these blocks in other tables. The blocks are constructed with a clustering algorithm that is also used to construct the bounding boxes of an R-tree.

It is desirable therefore to provide a system wherein the full richness of the data is maintained and 3D point clouds can be efficiently hosted, indexed and queried within a spatial system whilst maintaining the semantics of the raw point data.

### Object of the Invention

In order to facilitate efficient execution of spatial queries on these new spatial types, indexes must be able to process this 3D spatial data in a timely fashion and with taking all three dimensions into account.

### Summary of the Invention

The present invention as described herein with reference to the appended claims describes a method of indexing three-dimensional, 3D, point data within a spatial system comprising:
decomposing the 3D point data into one or more multiples of eight cubic regions populating an octree index structure by inserting the point data within each cubic region into said octree index structure.

The octree may be applied directly to point geometries as opposed to merely bounding blocks, such as those R-trees rely upon. It will be appreciated that through the use of the octree, semantic relationships between points may be maintained and because the octree has the ability to store data points directly, the richness of the data is not stripped, as is the case for the R-tree. As a practical example, this means that points with specific attributes can be grouped together in one cubic region. These cubic regions may also be referred to as cells.

In one embodiment, the 3D point data may be point cloud data and comprises 3D points resulting from laser scanning.

With LiDAR data obtained using laser scanning, an exemplary semantic criterion may be colour. This criterion could allow for example, for an 80% colour similarity within cells. Semantic data may also include but is not limited to specific red-green-blue values, time and date stamps, return value, pulse value, track number.

It will also be appreciated that 3D point data may also be meteorological data and other data related to remote sensing such as photogrammetry and Interferometric synthetic aperture radar (InSAR or IfSAR). The semantic criterion for meteorological data may be temperature, pressure or time and date stamps. The semantic criterion for photogrammetry data may be red-green-blue values or time and date stamps. It will be appreciated that the InSAR semantic data is similar but may also involve phase and radiation readings.

The octree index structure may be created using semantics associated with the 3D point data. This is not possible with bounding blocks which are formed according to simple sequential points per block aspects which result in similar points not being grouped together in the same bounding block. By using the octree index structure, it will be appreciated that the accuracy of searching and the length of search time may be improved over that currently possible with R-tree index structures which rely on bounding blocks.

Furthermore the octree is a disjointed hierarchical tree wherein the boundaries of tree nodes are not overlapping as often happens in the case of R-trees. If boundaries overlap, many more branches have to be traversed in order to process a query, which substantially reduces the R-tree's efficiency.

It will be appreciated that the octree may be used as one part of a hybrid indexing system. Two or more indexing systems may be simultaneously or sequentially applied in a hybrid approach, to index the blocks and to separately index the data points within each block. Presently, implemented data types store a pre-determined, fixed set of 3D points in a block containing binary large objects (BLOBs) in one table and then links supporting information about the data within these blocks to other tables. The blocks are constructed with the same clustering algorithm that is used to construct the bounding boxes of an R-tree. It will be appreciated that in an alternative configuration an R-tree may be applied to blocks and subsequently an octree applied on to the data that is stored within the blocks. The opposite case, i.e. constructing an R-tree index within each octree cell, is however not advised The implemented data blocks previously described automatically sorts 3D point data into blocks, which are then indexed by an R-tree. Additional value may only be gained by indexing the data within the blocks in order to maintain spatial semantics within each block. This is not feasible with R-trees. In a generalised example, the octree sorts 3D point data in a semantically meaningful manner. Applying an R-tree within an Octree cell would result in destroying its semantics, as bounding boxes need to be constructed for R-tree generation.

The 3D point data may comprise one or more of raw data, processed data or abstracted data. Raw data may be 3D point information in file formats originating from lasers scanning, pixels from photogrammetry, phase readings from InSAR, or temperature and pressure readings with affiliated GPS readings. The file formats originating from laser scanning may be proprietary and then processed as an ASCII x-y-z or las format.

The 3D point data may comprise at least one processed geometric object. This at least one processed geometric object may comprise at least one point, line, polygon, or solid that forms the descriptor of a spatial entity.

The method as described above may further comprise metadata associated with the 3D point data, the metadata comprising attributes associated with the index structure may also be used to create the index. The metadata may be stored as a tuple in a table or file structure. It will be appreciated that this metadata is crucial for the creation of an index.

The spatial system according to the present invention may be a file system or a data base system. The database may be a relational database management system or an object-relational database management system.

The method of populating the octree index structure may comprise applying a termination criterion. This termination criterion or growth level constraint may be for example a tree height level constraint. It will be appreciated that the implementation of a growth level constraint may allow for a more efficient search as it minimizes the occurrence of very long branches.

An octree index storage table may also be created. It will be appreciated that this allows permanent retrieval of the structure, i.e. there will be no need to rebuild the octree structure each time the spatial system's server is started. The creation and population of an index structure is time consuming and accordingly the retrieval of index structure is crucial to increasing efficiency. An operator may also be provided to query the indexed 3D point data. It will be appreciated that a query, as used herein, refers to a semantic construction that facilitates gathering and processing information. A query on the database may be formulated in a structured query language (SQL). An operator is dependent on the existence of a spatial index on the data set, and is defined by name and bounds of functionality, which define the operator's behaviour. In general, operators are called within the WHERE clause of a query.

The method as described herein may further comprise
accessing the octree index structure in the octree index storage table;
updating the octree index structure by inserting additional point data into said octree index structure;
propagating the updated octree index structure into the octree index storage table.

In a preferred embodiment a computer program comprising program instructions may implement the method of indexing as outlined above.

The present invention also encompasses a system for indexing three-dimensional, 3D, point data within a spatial system comprising:
means for decomposing the 3D point data into one or more multiples of eight cubic regions;
means for populating an octree index structure by inserting the point data within each cubic region into said octree index structure.

The 3D point data may be 3D point cloud data and comprises 3D points resulting from laser scanning. The 3D point data may comprise one or more of raw data, processed data or abstracted data. The 3D point data may comprise at least one processed geometric object. The system as described above may further comprise means for creating the octree index structure using semantics associated with the 3D point data. The system may further comprise metadata associated with the 3D point data. Additionally, the system may further comprise the metadata comprising attributes associated with the index structure. The metadata may be stored as a tuple in a table or file structure. The raw data may be 3D point information in file format originating from laser scanning. The at least one processed geometric object may comprise at least one point, line, polygon, or solid that forms the descriptor of a spatial entity. The spatial system may be a file system or database system. The database system may be a relational database management system. The database system may be an object-orientated system. The means for populating the octree index structure may further comprise applying a growth level constraint.

The system may further comprise means for creating an octree index storage table. The system may also comprise means for saving the octree index structure into the octree index storage table.

The system may further comprise means for providing an operator to query the indexed 3D point data.

The system may further comprise;
means for accessing the octree index structure in the octree index storage table;
means for updating the octree index structure by inserting additional point data into said octree index structure;
means for propagating the updated octree index structure into the octree index storage table.

It will be appreciated that octree structures can be used for compression mechanisms in visualisation tasks as it allows for the implementation of a mechanism that renders only viewable points.

While use of this invention is particularly advantageous in the field of laser scanning and in particular LiDAR data, it will be appreciated that this invention may be used in any situation where it is required to index 3D spatial data.

### Brief Description of the Drawings

The invention will be described in more detail below with reference to the accompanying drawings in which,
**Fig. 1** illustrates a three-dimensional indexing structure for a data type that may be used to store data representing a three-dimensional point cloud object in a spatial system.
**Fig. 2** illustrates a method associated with a spatial system that allows for the update of the index presented in Fig. 1.
**Fig. 3** illustrates a system associated with three-dimensional point cloud query processing.
**Fig. 4** illustrates a computing environment in which example systems and methods, and equivalents, may operate.
**Fig. 5** illustrates a query of an octree structure in accordance with the present invention.

### Detailed Description of the Drawings

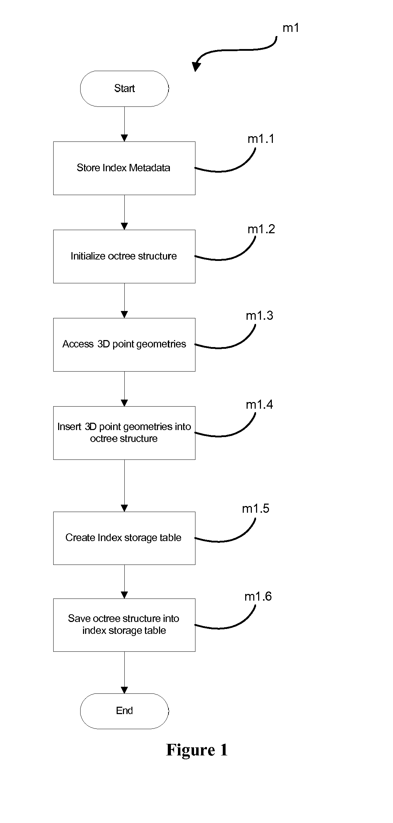

**FIG. 1** illustrates a method **m1** associated with three-dimensional (3D) volumetric data indexing. As shown in this exemplary method, 3D point cloud data is indexed within a spatial system using an octree. An octree is a tree structure where each node represents a cubic region. A node is either a leaf or has exactly eight child nodes. Growing an octree refers to the process of inserting a new point by first subdividing the space into eight regions and then inserting points into the appropriate node where some or all of these regions may be further subdivided. In an octree, each node represents a cubic region which may be recursively decomposed into eight cubic regions.

Referring again to Fig. 1, in **m1.1** meta data, which may include attributes such as octree level, index name and the name of index storage tables, crucial for the creation of the index is stored. The meta data may be stored as a tuple in a table or in a relevant file structure, such as xml. This relevant file structure may vary depending on the spatial system used.

In **m1.2** the octree structure is initialised. In initialising the octree structure the 3D bounds of the 3D point cloud sample as a whole is set up. The 3D points that are stored as point geometry data types in the spatial system are accessed, as show in **m1.3.** Point geometries may be stored in either a single table that provides a designated point type or as a structure of tables where the point data is stored as a Binary Large Object (BLOB) in blocks and associated information about the points, such as point identification number and the extent of the block (minimum and maximum values) are stored in a separate but linked table.

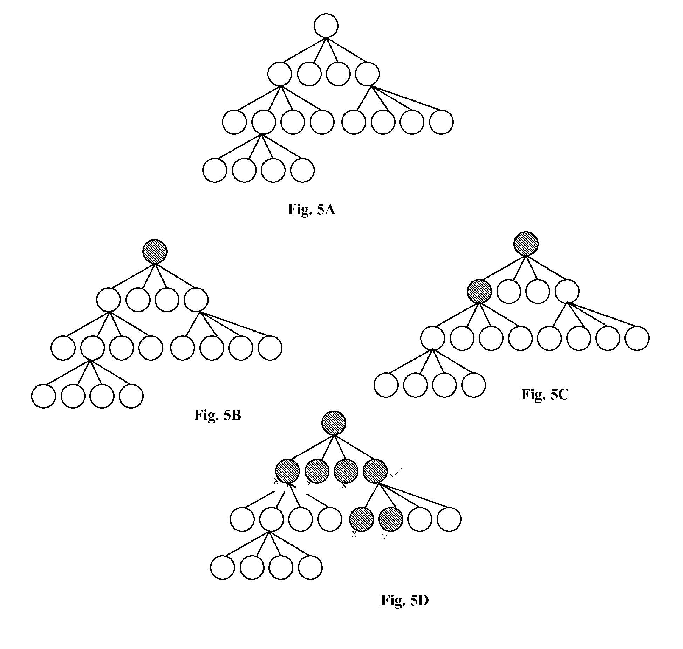

The 3D points that have been accessed in **m1.3** are now inserted into the octree structure as depicted in **m1.4** and as described above. In one embodiment, a height level constraint is applied onto the octree. Furthermore, this prevents an infinite splitting of the space, which would result in inefficient searches and inefficient memory usage. Traversal of the octree will stop if the search criterion is not valid for a certain leaf node. Querying the tree structure and inserting new points into the tree follows the pattern as shown in **Fig 5(a) (b) (c) and (d).**

Fig 5 (a) shows a quadtree for ease of reference. A quadtree is a two dimensional version of the octree where each node represents a square and is a leaf or has exactly four children. The search begins at the root node as shown in Fig 5(b). Following this the first child node is examined as shown in Fig 5(c). If the search criterion does not match the search continues with the next node on this level until the node fits within the search criterion. Fig 5(d) is indicative of the last node on this level being a match. Its child nodes are then further examined. As shown, the second node matches the search criterion and the search terminates at this stage. As there are no overlapping sectors, there is only one possible search result.

In **m1.5** of Fig 1, a table is created to store the index structure that has been populated in **m1.4.** It will be appreciated that this allows permanent retrieval of the structure, i.e. there will be no need to rebuild the octree structure each time the spatial system's server is started. The creation and population of an index structure is time consuming and accordingly the retrieval of index structure is crucial to increasing efficiency.

In **m1.6** the table, created in **m1.5,** is populated with the data generated in **m1.3** and **m1.4.**

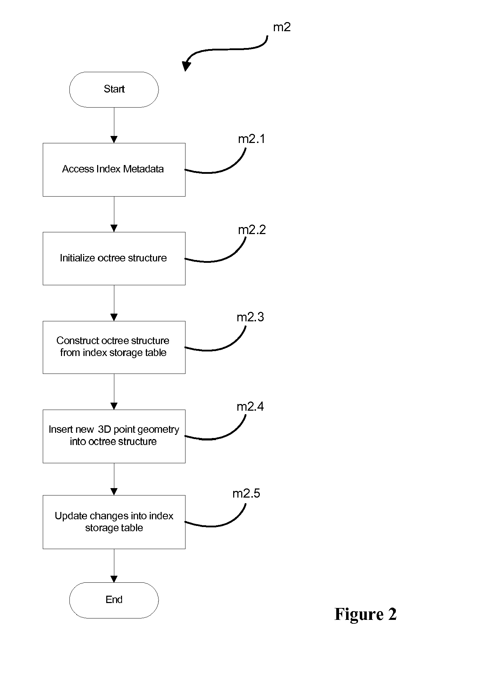

The method **m2,** illustrated in **FIG. 2** is associated with the insertion of new three-dimensional points in the three-dimensional data index. Method **m2** relates to the steps involved in inserting new 3D points into an existing octree structure. Initially as shown in **m2.1,** the index metadata is accessed.

In **m2.2** the octree index structure is initialized, which may comprise setting up the 3D bounds of the 3D point cloud sample as a whole. In a preferred embodiment this information is not taken from the user inserted meta data, as users have the option to manipulate this data, which would result in incorrect information.

The octree index structure is then constructed and loaded into memory according to the index storage table, as shown in **m2.3.**

In **m2.4** the new 3D points are inserted into the octree structure. In a preferred embodiment this step involves finding an appropriate leave node to store each new point. It will be appreciated that this step corresponds to **m1.4** of Fig 1.

In **m2.5** the changes applied to the index structure in **m2.4** are propagated into the index storage table in order to permanently reflect the changes.

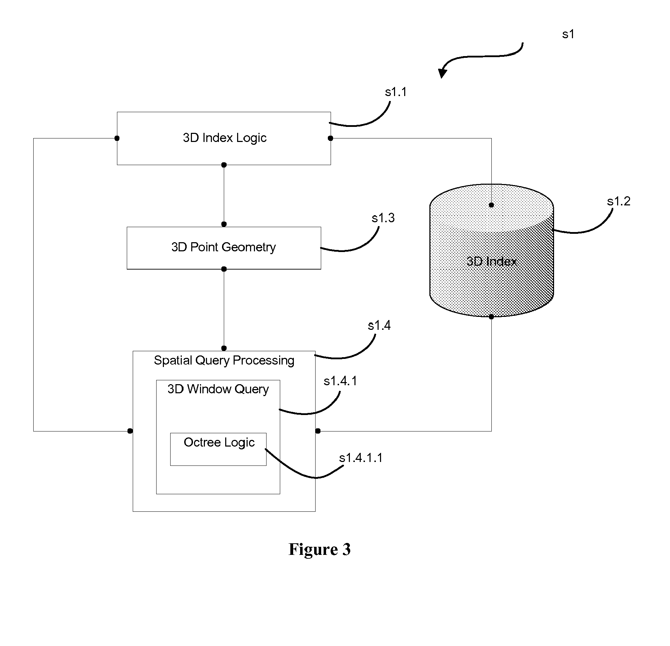

An exemplary system **s1** associated with three-dimensional volumetric data indexing is shown in **FIG. 3** System **s1** illustrates a spatial system that may contain the octree index according to the present invention, however, it will be appreciated that the methods outlined above may be applied to any possible spatial system.

**S1.1** contains the 3D spatial index logic, which is connected to the spatial index **s1.2.** In accordance with the present invention, the spatial index is an octree.

**S1.3** contains the 3D point geometry in the spatial system. Point geometries can be either stored in a single table that provides a designated point type or as a structure of tables where the point data is stored as a Binary Large Object (BLOB) in blocks and associated information about the points, such as point id and the extent of the block (minimum and maximum values) are stored in a separate but linked table.

**S1.4** contains the spatial query logic. The spatial query logic **s1.4** relies on the 3D index **s1.2** and its associated index logic **s1.1.** The query logic is operated on the 3D point geometry data in **s1.3.**

In our example, the spatial query logic **s1.4** provides an operator, which constructs a 3D window **s1.4.1.** This 3D window relies on an octree index **s1.4.1.** in our example.

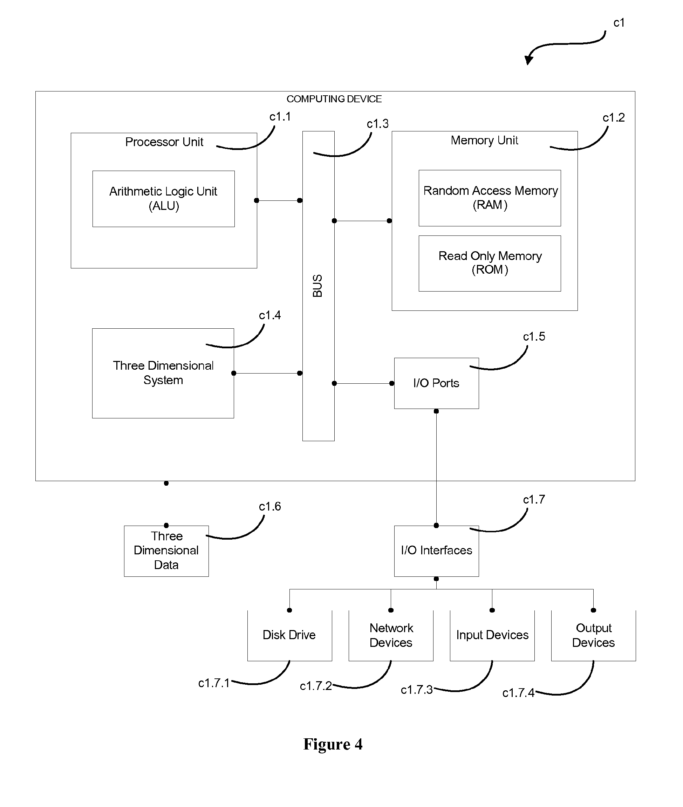

An exemplary computing device **c1** suitable for implementing the present invention is illustrated in **FIG. 4****.** The example computing device **c1** may host the system **s1,** which contains the octree index. The example computing device contains a processor **c1.1,** a memory unit **c1.2,** a bus **c1.3,** a three-dimensional system **c1.4** and input/output ports **c1.5** operably connected to the bus **c1.3.** In this example the computer may contain the three-dimensional system **c1.6** configured to facilitate three-dimensional volumetric query processing, however in alternative examples, the three-dimensional system **c1.6** may be implemented in hardware, software, firmware, and/or combinations thereof. While the logic of **c1.6** is illustrated as a hardware component attached to the bus **c1.3,** it is to be appreciated that in one example, the three-dimensional system **c1.6** could be implemented in a (E)PROM, which may be a part of the processor **c1.1. C1.7** are I/O interfaces such as disc drives C1.7.1, network devices, C1.7.2, input devices C.1.7.3 such as a mouse, a key-board or a joystick or the like and output devices C.1.7.4 such as printers, screens or the like which are employed to output information from the computer.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method of indexing three-dimensional, 3D, point data within a spatial system comprising:
decomposing the 3D point data into one or more multiples of eight cubic regions;
populating an octree index structure by inserting the point data within each cubic region into said octree index structure.

2. The method of Claim 1 wherein the 3D point data is 3D point cloud data and comprises 3D points resulting from laser scanning.

3. The method of Claim 1 or Claim 2 wherein the 3D point data comprises one or more of raw data, processed data or abstracted data.

4. The method of Claim 3 wherein the 3D point data comprises at least one processed geometric object.

5. The method of any of Claims 2 to 4 further comprising creating the octree index structure using semantics associated with the 3D point data.

6. The method of any preceding claim further comprising metadata associated with the 3D point data.

7. The method of any preceding claim further comprising metadata comprising attributes associated with the index structure.

8. The method of Claim 5 wherein the metadata is stored as a tuple in a table or file structure.

9. The method of Claim 3 wherein the raw data is 3D point information in file formats originating from laser scanning.

10. The method of Claim 4 wherein the at least one processed geometric object comprises at least one point, line, polygon, or solid that forms the descriptor of a spatial entity.

11. The method of any previous claim wherein the spatial system is a file system or database system.

12. The method of Claim 10 wherein the database system is a relational database management system.

13. The method of Claim 11 wherein the database system is an object orientated system.

14. The method of any previous claim wherein populating the octree index structure further comprises applying a termination criterion.

15. The method of any previous claim further comprising creating an octree index storage table.

16. The method of Claim 15 further comprising saving the octree index structure into the octree index storage table.

17. The method according to any previous claim further comprising providing an operator to query the indexed 3D point data.

18. The method according to Claim 17 further comprising:
accessing the octree index structure in the octree index storage table;
updating the octree index structure by inserting additional point data into said octree index structure;
propagating the updated octree index structure into the octree index storage table.

19. A computer program comprising program instructions for implementing the method of any of claims 1 to 18.

20. A system for indexing three-dimensional, 3D, point data within a spatial system comprising:
means for decomposing the 3D point data into one or more multiples of eight cubic regions;
means for populating an octree index structure by inserting the point data within each cubic region into said octree index structure.
